# EUROPÄISCHE PATENTSCHRIFT

(11) **EP 0 929 408 B1**
(45) Veröffentlichungstag und Bekanntmachung des Hinweises auf die Patenterteilung: **10.04.2002**
(21) Anmeldenummer: 97909274.9
(22) Anmeldetag: 16.09.1997
(51) Int. Cl.: B60J 5/04

(54) **FENSTERRAHMEN FÜR EINE KRAFTFAHRZEUGTÜR MIT EINEM FENSTERHEBER**
WINDOW FRAME FOR A MOTOR VEHICLE DOOR WITH A WINDOW WINDER
CADRE DE FENETRE POUR PORTIERE D'AUTOMOBILE AVEC UN LEVE-VITRE

(30) Priorität: 08.10.1996 DE 19641341
(43) Veröffentlichungstag der Anmeldung: 21.07.1999
(73) Patentinhaber: KÜSTER & Co. GmbH, 35630 Ehringshausen (DE)
(72) Erfinder: MEDEBACH, Thomas, D-35582 Wetzlar-Dutenhofen (DE); GUTIERREZ, Carmelo, D-35630 Ehringshausen (DE)
(74) Vertreter: Müller, Eckhard, Dr.
(86) Internationale Anmeldenummer: EP9705057
(87) Internationale Veröffentlichungsnummer: WO9815421

(56) Entgegenhaltungen:
- EP-A- 0 336 636
- EP-A- 0 385 197
- EP-A- 0 405 159
- EP-A- 0 420 617
- GB-A- 2 250 534
- US-A- 5 537 781

## Beschreibung

Die Erfindung bezieht sich auf einen Fensterrahmen einer Kraftfahrzeugtür mit einem Fensterheber, insbesondere Seilzug-Fensterheber der in Führungsschienen geführte Mitnehmer (10) zur Höhenverstellung der Fensterscheibe aufweist, wobei der Fensterrahmen aus zwei Querelementen und einem Längselement besteht, die Führungsschienen jeweils an einem freien Abschnitt der Querelemente befestigt und die Mitnehmer mit der vom Fensterrahmen aufgenommenen Fensterscheibe verbunden sind.

Derartige Fensterrahmen sind bekannt und kommen bevorzugt bei neuen Rahmenkonzepten für Kraftfahrzeugtüren o. dgl. zur Anwendung. Die Überlegungen der Automobilhersteller gehen dahin, die Kraftfahrzeugtür aus einer sogenannten Rumpftür und einen damit verbindbaren Fensterrahmen der eingangs genannten Art herzustellen. Zum Zusammenbau wird der Fensterrahmen, der bereits die Fensterdichtung, die Fensterscheibe selbst und ggf. die Türdichtung sowie das Anschlußteil für den Außenspiegel aufweist, von oben in den Fensterschacht der Rumpftür eingesteckt und bspw. stirnseitig mit dem Türkasten verbunden. Der Fensterheber wird dann nachträglich in den Türkasten eingebaut. Bei der Montage muß der Rahmen bzgl. der Dachkontur wie auch zu den Seiten hin ausgerichtet werden. Dadurch ändert sich jedoch die Positionierung der mit dem Fensterrahmen verbundenen bzw. in dem Fensterrahmen integrierten Führungen für die Fensterscheibe relativ zum Türkasten bzw. zur Rumpftür. Demgemäß bedarf es in diesem Fall einer Nachjustage bzw. erneuten Ausrichtung des Fensterhebers in Bezug auf die geänderte Positionierung des Fensterrahmens.

Ein Fensterrahmen mit den eingangs genannten Merkmalen ist beispielsweise aus der GB 2250534 A bekannt. Die Kraftfahrzeugtür weist eine Art Sandwichbauweise auf, wobei ein Rahmenmodul mit einem Fensterrahmenmodul sowie einem Türschloßmodul verbunden und ein äußeres und ein inneres Wannenmodul an dieser Innenkonstruktion befestigt sind. Nachteilig hierbei erweist sich der recht aufwendige und komplizierte Zusammenbau an dem Fertigungsband des Kraftfahrzeugherstellers, da die Fahrzeugtür aus wenigstens fünf miteinander zu verbindenden Komponenten besteht.

Ähnliches gilt auch für die Kraftfahrzeugtür nach der EP 0 405 159 A1, bei der ein Fensterrahmenmodul seitlich in eine Kraftfahrzeugtür mit einem integrierten, gitterartigen Tragrahmen einsetzbar, mit diesem Tragrahmen verbindbar ist. Weiterhin wird an der Kraftfahrzeugtür eine Türaußenhaut sowie ein innenliegender Schutzkörper befestigt. Auch diese konstruktive Ausgestaltung einer Fahrzeugtür erfordert eine Vielzahl von Montageschritten und ist somit sehr arbeitsaufwendig.

Die EP 0 385 197 A1 offenbart eine Fahrzeugtür, welche einen als Vormontagegruppe ausgebildeten Aggregateträger umfaßt. Der Aggregateträger ist gegenüber dem Türkörper einstellbar und weist eine einzige Fensterheberschiene für eine an der Fahrzeugtür versenkbare Scheibe auf. Im unteren Endbereich der Fensterheberschiene ist ein Ansatz vorgesehen, welcher bei einem Seitenaufprall mit einer Aussparung im Türkörper verhakt. Der Aggregateträger mit integriertem Fensterrahmen wird seitlich in die Tür eingesetzt und mit dieser verschraubt. Bei dem Aggregateträger handelt es sich um ein äußerst massives Teil, welches aus einer Vielzahl von Bauelementen aufgebaut und somit konstruktiv aufwendig hergestellt ist.

Demgegenüber liegt der Erfindung die Aufgabe zugrunde, einen Fensterrahmen mit einem Fensterheber der eingangs genannten Art dahingehend weiterzubilden, daß eine einfache Montage der Fahrzeugtür inklusive des Fensterhebers gewährleistet und der Fensterheber konstruktiv unaufwendig aufgebaut ist.

Diese Maßnahme wird nach der Erfindung bei dem Fensterrahmen mit den eingangs genannten Merkmalen i. w. dadurch gelöst, daß der Fensterrahmen als einseitig offene Aufnahme, Führung bzw. Halterung für die Fensterscheibe ausgebildet und zur Montage mit den Querelementen von oben in einen Fensterschacht einer einen Türkasten bildenden Rumpftür eingesteckt ist, wobei die Rumpftür und der Fensterrahmen an einer Stirnseite des Türkastens miteinander verbunden sind.

Durch diese Maßnahmen wird von Vorteil erreicht, daß bei der Montage des Fensterrahmens bzw. bei dessen Ausrichtung bzgl. der Dachkontur wie auch der Seiten eine ggf. zusätzlich erforderliche Ausrichtung der Führungsschienen bzw. der weiteren Bauteile des Fensterhebers nicht erforderlich ist, da aufgrund der modulartigen Verbindung des Fensterhebers mit dem Fensterrahmen stets eine feste Zuordnung zwischen den Führungsschienen des Fensterhebers und der Fensterscheibe bzw. den Scheibenführungen besteht. Darüber hinaus bietet dieses Fensterrahmenkonzept mit integriertem Fensterheber den Vorteil, daß separate Hilfsmittel zur Fixierung der Fensterscheibe nicht erforderlich sind. Die nach den herkömmlichen Konzepten notwendigen Hilfsbefestigung der Scheibe sind somit entbehrlich. Ein weiterer Vorteil ist auch der Integrationsgrad, so daß in der Montagelinie des Automobilherstellers gegenüber den herkömmlichen Vorrichtungen bzw. Verfahren erheblich weniger separate Teile zusammengefügt bzw. montiert werden müssen.

Nach einer ersten Ausführungsform der Erfindung hat es sich als vorteilhaft erwiesen, daß an den freien Endbereichen der Führungsschienen Umlenkelemente für den Seilzug befestigt sind.

Dabei bietet es sich an, daß der Seilzug nach Art einer 8-Form um die Umlenkelemente geführt und mit den Mitnehmern verbunden ist.

Von Vorteil ist die Scheibenführung bereits in die Querelemente und ggf. das Längselement integriert.

Auch die Dichtungsprofile für die Fensterscheibe sind nach einer anderen Ausführungsform der Erfindung in dem Fensterrahmen integriert.

Eine andere vorteilhafte Weiterbildung dieses Rahmenkonzepts eines Fensterrahmens besteht darin, daß das Anschlußteil für den Außenspiegel Bestandteil des Fensterrahmens und insbesondere einstückig dem Fensterrahmen angeformt ist.

Von Vorteil ist gemäß einer anderen Ausführungsform ein elektrischer Antrieb mit dem Seiltrommelgehäuse koppelbar.

Die Erfindung betrifft auch ein Verfahren zur Montage eines Fensterrahmens nach einem der vorhergehenden Ansprüche. Das Verfahren zeichnet sich dadurch aus, daß man den Fensterrahmen von oben in den Fensterschacht einsteckt und mit der Rumpftür bspw. mittels Verschraubung verbindet und anschließend einen elektrischen Antrieb mit dem Seiltrommelgehäuse koppelt sowie den Antrieb an der Rumpftür, insbesondere einem Türinnenblech der Rumpftür, befestigt.

Weitere Vorteile und Anwendungsmöglichkeiten der vorliegenden Erfindung ergeben sich aus der nachfolgenden Beschreibung eines Ausführungsbeispieles anhand der Zeichnungen.

Es zeigen:

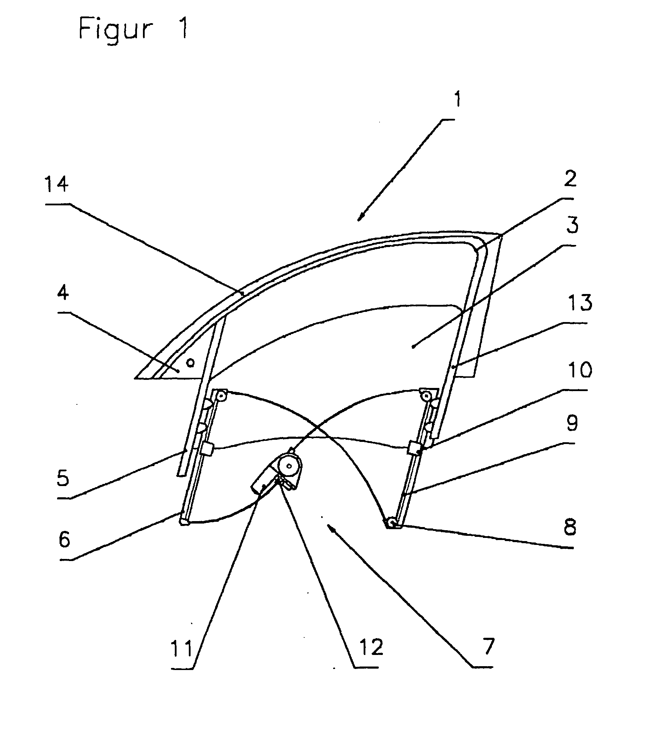

- Figur 1: ein Ausführungsbeispiel des erfindungsgemäßen Fensterrahmens mit einem Fensterheber in Seitenansicht und schematischer Darstellung und

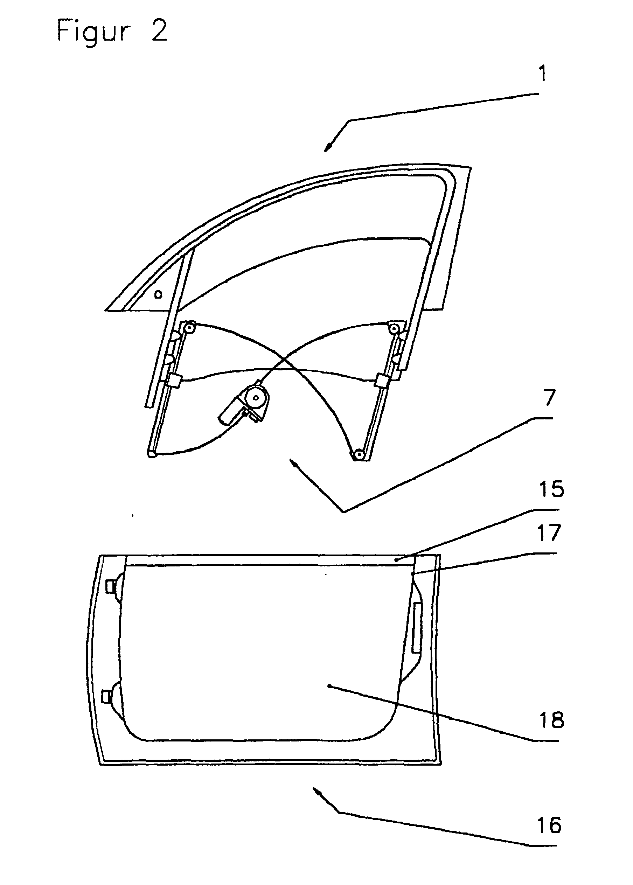

- Figur 2: das Zusammenfügen des Fensterrahmens mit einer Rumpftür.

Der Fensterrahmen 1 gemäß den Figuren wird von oben in den Fensterschacht 15 einer Rumpftür 16 eines Kraftfahrzeuges zum Zwecke der Montage eingesteckt. An bzw. in den Fensterrahmen 1 integriert sind die Scheibenführungen 2 und ggf. die Dichtungsprofile für die Fensterscheibe 3. Weiterhin ist an dem Fensterrahmen 1 ein Anschlußteil 4 vorgesehen, an welchem der Außenspiegel befestigbar ist.

Der Fensterrahmen 1 besteht aus zwei Querelementen 13 und einem Längselement 14, welches die Querelemente 13, insbesondere einstückig miteinander verbindet, so daß der Fensterrahmen 1 als einseitig offene Aufnahme, Führung bzw. Halterung für die Fensterscheibe 3 ausgebildet ist.

Die Führungsschienen 6 des Seilzug-Fensterhebers 7 sind jeweils an einem freien, in den Fensterschacht einsteckbaren Abschnitt 5 der Querelemente 13 befestigt. Die in den Führungsschienen 6 geführten Mitnehmer 10 zur Höhenverstellung der Fensterscheibe 3 sind mit der vom Fensterrahmen 1 aufgenommenen Fensterscheibe 3 verbunden. An den oberen und unteren Enden der Führungsschienen 6 sind jedenfalls Umlenkelemente 8 für den Seilzug 9 des Seilzug-Fensterhebers 7 angeordnet. Der Seilzug 9 ist 8-förmig um die Umlenkelemente 8 geführt oder geschlungen, wobei die in den Führungsschiene 6 geführten Mitnehmer 10 für die Fensterscheibe 3 an dem Seilzug 9 befestigt sind. Durch eine synchrone Auf- und Abwärtsbewegung des Seilzuges 9 kann die Fensterscheibe 3 angehoben bzw. abgesenkt werden. Der Seilzug 9 in einem Seiltrommelgehäuse 12 geführt, wobei die Seiltrommel mittels eines elektrischen Antriebes 11 in Drehung versetzt werden kann.

Die Scheibenführung ist in die Querelemente 13 und ggf. das Längselement 14 des Fensterrahmens 1 integriert. Auch die Dichtungsprofile für die Fensterscheibe 3 sind in dem Fensterrahmen 1 integriert.

Zur Montage wird der Fensterrahmen 1 mit dem integrierten Seilzug-Fensterheber 7, welcher das Seiltrommelgehäuse 12, jedoch nicht den elektrischen Antrieb 11 umfaßt, an das Band des Automobilherstellers geliefert. Der Fensterrahmen 1 wird dann mit den freien Enden der Querelemente 13, an denen unter anderem die Führungsschiene 6 befestigt sind, in den Fensterschacht 15 der Rumpftür 16 eingesteckt und ggf. mit der Rumpftür, bspw. an der Stirnseite des Türkastens 17 verbunden. Danach wird der elektrische Antrieb 11 eingesetzt, in dem eine Abtriebswelle des Antriebs 11 durch eine entsprechende Öffnung im Türinnenblech hindurchgesteckt und mit dem Seiltrommelgehäuse 12 gekuppelt wird. Hierdurch ist eine Fixierung des Antriebs 11 sowie des Seiltrommelgehäuses 12 erreicht.

Neben den bereits erwähnten Vorteilen des erfindungsgemäßen Rahmenkonzeptes mit integrierten Fensterheber besteht ein anderer Vorteil darin, daß der Antrieb 11 aufgrund der erfindungsgemäßen Maßnahmen auf der Innenseite des Türbleches vor Spritzwasser geschützt angeordnet ist.

### Bezugszeichenliste

- 1 -: Fensterrahmen
- 2 -: Scheibenführung
- 3 -: Scheibe
- 4 -: Anschlußteil
- 5 -: Abschnitt
- 6 -: Führungsschiene
- 7 -: Seilzug-Fensterheber
- 8 -: Umlenkelement
- 9 -: Seilzug
- 10 -: Mitnehmer
- 11 -: Antrieb
- 12 -: Seiltrommelgehäuse
- 13 -: Querelement
- 14 -: Längselement
- 15 -: Fensterschacht
- 16 -: Rumpftür
- 17 -: Türkasten
- 18 -: Türinnenblech

## Patentansprüche

1. Fensterrahmen (1) einer Kraftfahrzeugtür mit einem Fensterheber, insbesondere Seilzug-Fensterheber (7) der in Führungsschienen (6) geführte Mitnehmer (10) zur Höhenverstellung der Fensterscheibe (3) aufweist, wobei der Fensterrahmen (1) aus zwei Querelementen (13) und einem Längselement (14) besteht, die Führungsschienen (6) jeweils an einem freien Abschnitt (5) der Querelemente (13) befestigt und die Mitnehmer (10) mit der vom Fensterrahmen (1) aufgenommenen Fensterscheibe (3) verbunden sind, **dadurch gekennzeichnet, daß** der Fensterrahmen (1) als einseitig offene Aufnahme, Führung bzw. Halterung für die Fensterscheibe (3) ausgebildet und zur Montage mit den Querelementen (13) von oben in einen Fensterschacht (15) eine einen Türkasten bildenden Rumpftür eingesteckt ist, wobei die Rumpftür und der Fensterrahmen (1) an einer Stimseite des Türkastens (17) miteinander verbunden sind.

2. Fensterrahmen nach Anspruch 1, **dadurch gekennzeichnet, daß** an den freien Endbereichen der Führungsschienen (6) Umlenkelemente (8) für den Seilzug (9) befestigt sind.

3. Fensterrahmen nach Anspruch 2, **dadurch gekennzeichnet, daß** der Seilzug nach Art einer 8-Form um die Umlenkelemente (8) geführt und mit den Mitnehmern (10) verbunden ist.

4. Fensterrahmen nach einem der vorhergehenden Ansprüche, **dadurch gekennzeichnet, daß** die Scheibenführung in die Querelemente (13) und ggf. das Längselement (14) integriert ist.

5. Fensterrahmen nach einem der vorhergehenden Ansprüche, **dadurch gekennzeichnet, daß** die Dichtungsprofile für die Fensterscheibe (3) in dem Fensterrahmen (1) integriert sind.

6. Fensterrahmen nach einem der vorhergehenden Ansprüche, **dadurch gekennzeichnet, daß** das Anschlußteil (4) für den Außenspiegel Bestandteil des Fensterrahmens (1) und insbesondere einstückig dem Fensterrahmen (1) angeformt ist.

7. Fensterrahmen nach einem der vorhergehenden Ansprüche, **dadurch gekennzeichnet, daß** ein elektrischer Antrieb (11) mit dem Seiltrommelgehäuse (12) koppelbar ist.

8. Verfahren zur Montage eines Fensterrahmens (1) nach einem der vorhergehenden Ansprüche, **dadurch gekennzeichnet, daß** man den Fensterrahmen (1) von oben in den Fensterschacht (15) einsteckt und mit der Rumpftür bspw. mittels Verschraubung verbindet und anschließend einen elektrischen Antrieb (11) mit dem Seiltrommelgehäuse (12) koppelt sowie den Antrieb (11) an der Rumpftür, insbesondere am Türinnenblech befestigt.

## Claims

1. Window frame (1) of a motor vehicle door with a window lifter, especially a cable pull window lifter (7), which comprises entrainers (10), which are guided in guide rails (6), for height adjustment of the window pane (3), wherein the window frame (1) consists of two transverse elements (13) and a longitudinal element (14), the guide rails (6) are each fastened to a respective free portion (5) of the transverse elements (13) and the entrainers (10) are connected with the window pane (3) received by the window frame (1), **characterised in that** the window frame (1) is constructed as a receiver, guide or holder, which is open at one side, for the window pane (3) and for mounting is inserted, together with the transverse elements (13), from above into a window shaft (15) at a door hull forming a door box, wherein the door hull and the window frame (1) are connected together at an end face of the door box (17).

2. Window frame according to claim 1, **characterised in that** deflecting elements (8) for the cable pull (9) are fastened at the free end regions of the guide rails (6).

3. Window frame according to claim 2, **characterised in that** the cable pull is guided in the manner of an '8' shape around the deflecting elements (8) and is connected with the entrainers (10).

4. Window frame according to one of the preceding claims, **characterised in that** the pane guide is integrated in the transverse elements (13) and optionally the longitudinal element (14).

5. Window frame according to one of the preceding claims, **characterised in that** the sealing profile member for the window pane (3) is integrated in the window frame (1).

6. Window frame according to one of the preceding claims, **characterised in that** the connecting part (4) for the outside mirror is a component of the window frame (1) and in particular integral with the window frame (1).

7. Window frame according to one of the preceding claims, **characterised in that** an electric drive (11) can be coupled with the cable drum housing (12).

8. Method of mounting a window frame (1) according to one of the preceding claims, **characterised in that** the window frame (1) is inserted from above into the window shaft (15) and connected with the door hull by means of, for example, screw connection and subsequently an electric drive (11) is coupled with the cable drum housing (12) and the drive (11) fastened to the door hull, in particular to the door inner metal panel.

## Revendications

1. Cadre de vitre (1) d'une portière de véhicule automobile, muni d'un lève-vitre, en particulier d'un lève-vitre (7) à commande par câble, qui comporte des entraîneurs (10) guidés dans des rails de guidage (6) permettant le déplacement vertical de la vitre (3), le cadre de vitre (1) étant composé de deux éléments transversaux (13) et d'un élément longitudinal (14), les rails de guidage (6) étant respectivement fixés sur une partie libre (5) des éléments transversaux (13), et les entraîneurs (10) étant reliés à la vitre (3) reçue dans le cadre de vitre (1), **caractérisé en ce que** le cadre de vitre (1) est configuré comme un support, guide ou maintien de la vitre (3), ouvert unilatéralement, et **en ce que**, lors du montage, il est introduit avec les éléments transversaux (13), par le haut dans un puits de vitre (15) d'une portière-coque formant un coffre de portière, la portière-coque et le cadre de vitre (1) étant reliés l'un à l'autre au niveau d'une face frontale du coffre de portière (17).

2. Cadre de vitre selon la revendication 1, **caractérisé en ce que** des éléments de renvoi (8) pour le câble de commande (9) sont fixés aux parties terminales libres des rails de guidage (6).

3. Cadre de vitre selon la revendication 2, **caractérisé en ce que** le câble de commande est enroulé autour des éléments de renvoi (8) en décrivant une forme de 8, et est relié à des entraîneurs (10).

4. Cadre de vitre selon l'une des revendications précédentes, **caractérisé en ce que** le guidage de la vitre est intégré dans les éléments transversaux (13) et, le cas échéant, dans l'élément longitudinal (14).

5. Cadre de vitre selon l'une des revendications précédentes, **caractérisé en ce que** les joint profilés d'étanchéité de la vitre (3) sont intégrés dans le cadre de vitre (1).

6. Cadre de vitre selon l'une des revendications précédentes, **caractérisé en ce que** l'élément d'embase (4) pour le rétroviseur extérieur fait partie intégrante du cadre de vitre (1) et est notamment formé d'un seul tenant sur le cadre de vitre (1).

7. Cadre de vitre selon l'une des revendications précédentes, **caractérisé en ce qu'**un actionneur électrique (11) peut être accouplé au boîtier (12) de tambour cabestan.

8. Procédé de montage d'un cadre de vitre (1) selon l'une des revendications précédentes, **caractérisé en ce que** l'on introduit le cadre de vitre (1) par le haut dans le puits de vitre (15) et le fixe dans la portière-coque au moyen de vis par exemple, et que l'on accouple ensuite un actionneur électrique (11) au boîtier de tambour cabestan (12) et fixe l'actionneur (11) dans la portière-coque, en particulier sur la tôle intérieure de la portière.
